Europäisches Patentamt

European Patent Office

Office européen des brevets

(19)

(11) Veröffentlichungsnummer: **0 379 910**
**A1**

(12) **EUROPÄISCHE PATENTANMELDUNG**

(21) Anmeldenummer: **90100660.1**

(22) Anmeldetag: **13.01.90**

(51) Int. Cl.5: **C01B 21/06, C01B 21/068**

(30) Priorität: **21.01.89 DE 3901725**
**22.07.89 DE 3924300**

(43) Veröffentlichungstag der Anmeldung:
**01.08.90 Patentblatt 90/31**

(84) Benannte Vertragsstaaten:
**DE FR GB**

(71) Anmelder: **BASF Aktiengesellschaft**
**Carl-Bosch-Strasse 38**
**D-6700 Ludwigshafen(DE)**

(72) Erfinder: **Mair, Gunther, Dr.**
**Corneliusstrasse 15**
**D-6800 Mannheim 1(DE)**
Erfinder: **Bittler, Knut, Dr.**
**Kardinal-Wendel-Strasse 54**
**D-6720 Speyer(DE)**
Erfinder: **Sterzel, Hans-Josef, Dr.**
**Wasgauring 3**
**D-6701 Dannstadt-Schauernheim(DE)**
Erfinder: **Grammatis, Zafirios Dr.**
**Eckenerstrasse 32**
**D-6704 Mutterstadt(DE)**

(54) Verfahren zur Herstellung von pulverförmigen Metallnitriden.

(57) Pulverförmige Metallnitride werden in einem Zweistufenverfahren hergestellt durch Umsetzung von Metall-Halogen-Verbindungen mit Ammoniak in einer ersten Stufe und Temperung der in der ersten Stufe erhaltenen Reaktionsprodukte bei Temperaturen von 500 bis 1700° C. Die Metall-Halogen-Verbindungen werden in Form von Tröpfchen in eine Reaktionszone mit Ammoniakatmosphäre eingeführt. Das Verfahren eignet sich insbesondere zur Herstellung von Siliciumnitrid. In der ersten Stufe können Temperaturen von 0 bis 800° C eingehalten werden, insbesondere Temperaturen von 300 bis 800° C.

## Verfahren zur Herstellung von pulverförmigen Metallnitriden

Vorliegende Erfindung betrifft ein Verfahren zur Herstellung von Metallnitrid-, insbesondere von Siliciumnitrid-Pulvern durch Umsetzung von Metall-Halogen-Verbindungen mit Ammoniak.

Nachdem Werkstücke aus gesintertem Siliciumnitrid wegen ihrer großen Härte und ihrer hohen Hitzebeständigkeit an Bedeutung zunehmen, gewinnen auch die Verfahren zur Herstellung des als Ausgangsprodukt erforderlichen pulverförmigen Siliciumnitrids immer mehr Interesse.

Zur Herstellung von Siliciumnitrid existieren 4 verschiedene Verfahren (DE-PS 29 15 023) nämlich

1) direkte Nitridierverfahren, bei denen das Silicium in Gegenwart von Ammoniak oder Stickstoff auf hohe Temperaturen erhitzt wird,

2) Verfahren, bei denen ausgehend von Siliciumdioxid dieses mit Kohlenstoff in Gegenwart von Stickstoff erhitzt wird, d.h. bei denen die Reduktion und Nitridierung gemeinsam durchgeführt werden (vgl. auch DE-OS 28 14 235),

3) Umsetzung von Siliciumtetrachlorid mit Ammoniak in der Gasphase bei hohen Temperaturen von 400 bis 1800° C (vgl. auch EU-OS 00 70 440 und 02 19 764) und

4. thermische Zersetzung von durch Umsetzung von in Lösungsmitteln gelösten Siliciumtetrachlorid mit flüssigem Ammoniak erhaltenem Siliciumimid zu Siliciumnitrid.

Von diesen Verfahrensvarianten hat sich bisher nur das unter 1) zitierte Verfahren in der Technik durchsetzen können, obwohl es auch mit einer Reihe von Nachteilen behaftet ist. Es hat nämlich zur Voraussetzung, daß man, um ein Siliciumnitrid hoher Reinheit herstellen können, auch sehr reines Silicium einsetzen muß, dessen Herstellung aber aufwendig ist.

Bei dem Verfahren gemäß der Variante 2 muß man von sorgfältig gereinigtem $SiO_2$- und C-Pulver ausgehen und es weist noch den weiteren Nachteil auf, daß das Reaktionsprodukt neben Siliciumnitrid auch andere Produkte wie Siliciumcarbid enthält.

Bei dem unter 3) zitierten Verfahren ist es zwar möglich, das als Ausgangmaterial benötigte Siliciumtetrachlorid leicht in hoher Reinheit durch Destillation herzustellen, jedoch ist es mit einigen verfahrensbedingten Nachteilen behaftet, die vor allem darin bestehen, daß das gebildete Nitrid sich an den Wandungen des Reaktors niederschlägt und von dort irgendwie entfernt werden muß. Dieses Verfahren eignet sich daher mehr zur Beschichtung von Oberflächen mit Siliciumnitrid als zur Herstellung von pulverförmigem Siliciumnitrid. Hinzu kommt, daß dieses Verfahren zur Erzielung hoher Raum-Zeit-Ausbeuten zweckmäßig bei Temperaturen über 1000° C durchgeführt werden muß, was dann aber werkstoffseitige Probleme nach sich zieht.

Bei dem gemäß 4) zitierten Verfahren gelten bezüglich der Reinheit des Ausgangsmaterials Siliciumtetrachlorid die gleichen Ausführungen wie gemäß dem Verfahren nach Variante 3). Bei diesem Verfahren, das in J. Am. Cer. Soc. 56, No. 12, 1973, Seite 628, näher beschrieben ist, wird in einer ersten Stufe das Siliciumtetrachlorid, das in einem inerten Lösungsmittel gelöst ist, mit Ammoniak zu Siliciumdiimid umgesetzt. Das Verfahren hat den Nachteil, daß gemäß der Reaktionsgleichung

1. $SiCl_4 + 6NH_3 \rightarrow Si(NH)_2 + 4NH_4Cl$

pro Mol Siliciumdiimid 4 Mole Ammoniumchlorid gebildet werden und wegen der großen anfallenden Feststoffmengen, die in dem inerten Lösungsmittel unlöslich sind, die Reaktionsmischung schnell verdickt und dann nur schwer manipulierbar wird. Bei einem in der DE-PS 29 15 023 beschriebenen Verfahren zur Herstellung von Metallnitriden, wird so gearbeitet, daß man ein Metallhalogenid, z.B. Siliciumtetrachlorid, in ein organisches Lösungsmittel einleitet, dessen spezifisches Gewicht größer ist als dasjenige des flüssigen Ammoniaks. Diese Lösung wird mit flüssigem Ammoniak überschichtet, wobei die Reaktion an der Grenzfläche der beiden flüssigen Phasen stattfindet. Das gebildete Ammoniumchlorid löst sich in flüssigem Ammoniak. Aber auch dieses Verfahren ist wegen des Arbeitens mit flüssigem Ammoniak aufwendig. Die bei diesem Verfahren in der ersten Stufe gebildeten Metallimide werdend anschließend in einer zweiten Stufe thermisch bei Temperaturen von 1200 bis 1600° C in Nitride übergeführt. Dieses Verfahren ist wegen der komplizierten Reaktionsfähigkeit aufwendig und da die Reaktion ausschließlich auf die Grenzschicht beschränkt ist, mit niedrigen Raum-Zeit-Ausbeuten verbunden.

Der vorliegenden Erfindung lag die Aufgabe zugrunde, ein Verfahren zur Herstellung von pulverförmigen Metallnitriden durch Umsetzung von Metall-Halogen-Verbindungen in einer ersten Stufe, Abtrennung des gebildeten festen pulverförmigen Reaktionsproduktes und Temperung dieses Reaktionsproduktes in einer zweiten Stufe bei Temperaturen von 500 bis 1700° C bereitzustellen, bei dem diese Nachteile nicht auftreten.

Es wurde gefunden, daß man diese Aufgabe dadurch lösen kann, daß man die Metall-Halogen-Verbindung in Form von Tröpfchen in eine in einer Reaktionszone befindliche Ammoniakatmosphäre eindüst.

Wesentlich ist, daß bei der Durchführung des erfindungsgemäßen Verfahrens die Metall-Halogen-Verbindung in Form von Tröpfchen in die Reaktionszone eingeführt wird. Als Metall-Halogen-Verbindungen im Sinne der vorliegenden Erfindung kommen im wesentlichen die Verbindungen der Elemente Bor, Titan, Vanadium und insbesondere des Siliciums in Betracht. Aus wirtschaftlichen Gründen sind die Chloride bevorzugt. Dementsprechend kommen insbesondere die Verbindungen $BCl_3$, $TiCl_4$, $VCl_4$ und $SiCl_4$ in Betracht. Insbesondere beim Silicium kann das Chlor teilweise durch Wasserstoff oder Alkylgruppen mit 1 bis 3 C-Atomen ersetzt sein. Genannt seien beispielsweise die Verbindungen $SiHCl_3$, $Si(CH_3)_2Cl_2$, $SiH(CH_3)Cl_2$. Um sicherzustellen, daß eine vorzeitige Verdampfung in der Düse nicht stattfindet, können die Verbindungen, die einen niedrigen Siedepunkt aufweisen, z.B. $BCl_3$, das bei Normalbedingungen bei 13°C siedet, gekühlt werden.

Diese Verbindungen werden in Form von Tröpfchen in eine Reaktionszone eingedüst, in der sich eine Ammoniakatmosphäre befindet. Unter Ammoniakatmosphäre wird eine solche verstanden, die entweder ganz aus Ammoniak besteht oder bei der das Ammoniak mit einem gegenüber den Reaktionskomponenten inerten Gas wie Edelgase, Stickstoff und/oder Wasserstoff verdünnt ist. Ammoniak setzt sich mit den Metall-Halogen-Verbindungen unter Bildung von festen Metallimiden bzw. -amiden um. Da die Reaktion exotherm ist, steigt die Temperatur in der Reaktionszone je nach Durchsatz auf Werte bis zu 300°C an. Die festen Reaktionsprodukte werden in üblicher Weise von der Gasatmosphäre abgetrennt. Man kann jedoch auch bei Temperaturen von oberhalb 300°C arbeiten.

Vorteilhaft wird man jedoch aus energetischen und werkstoffbedingten Gründen Temperaturen von 800°C nicht überschreiten. Zur Erzielung von Temperaturen oberhalb von 300°C in der ersten Stufe muß der Reaktionszone in der Regel Wärme von außen zugeführt werden, da die Wärmetönung der Reaktion nicht ausreicht, diese Temperaturen zu erreichen. Das Arbeiten bei Temperaturen oberhalb von 300°C bringt den Vorteil mit sich, daß das als Nebenprodukt anfallende Ammoniumhalogenid im gasförmigen Zustand verbleibt und so auf einfachem Wege von den sich bildenden Metallimiden bzw. -amiden durch eine Heißgasfiltration z.B. mit Keramik-, Quarzglas-oder Sintermetallfiltern abgetrennt werden kann. Damit wird die nachfolgende Temperstufe entlastet, bei der einerseits die Metallamide bzw. -imide in die Nitride übergeführt, andererseits die gleichzeitig gebildeten Ammoniumhalogenide durch Sublimation abgetrennt werden.

Für die Einführung der Metall-Halogen-Verbindungen in die Reaktionszone in Tröpfchenform bedient man sich zweckmäßig einer Düse, wobei man durch Variation der Flüssigkeitsdrucke und der Düsenöffnung die Tröpfchengröße, die in der Regel 5 bis 100 μm beträgt, in gewünschter Weise variieren kann. Vorteilhaft werden die Metall-Halogen-Verbindungen über die innere Düsenöffnung einer Zweistoffdüse in die Reaktionszone eingeführt, während gleichzeitig durch die äußere Düsenöffnung ein gegenüber den Ausgangsstoffen und Reaktionsprodukten inertes Gas wie Stickstoff, Wasserstoff oder Edelgase in die Reaktionszone eingeführt wird. Auf diese Weise wird sichergestellt, daß die Metall-Halogen-Verbindung nicht unmittelbar beim Austritt aus der Düsenöffnung mit dem Ammoniak in Berührung kommt. Dadurch wird ein Verkrusten der Düsenöffnung mit Sicherheit vermieden.

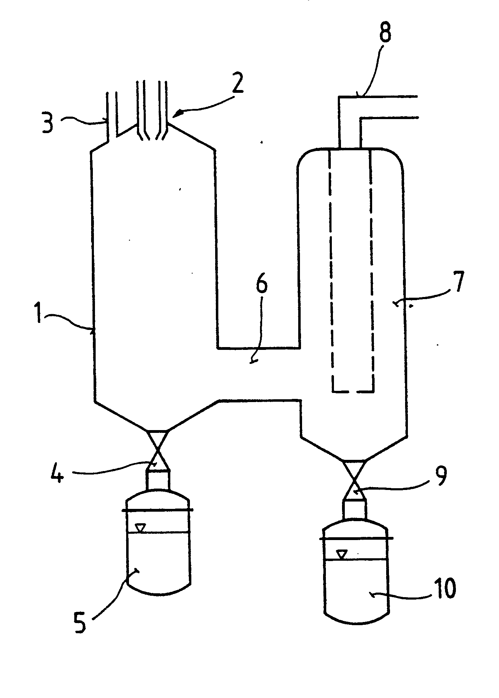

Das erfindungsgemäße Verfahren sei im folgenden anhand der Figur näher erläutert. Mit 1 ist ein Reaktonsrohr bezeichnet, an dessen oberem Ende eine Zweistoffdüse angeordent ist, durch deren innere Düsenöffnung , wie oben beschrieben, die Metall-Halogen-Verbindung und durch deren äußere Düsenöffnung ein Inertgas in das Reaktionsrohr eingeführt wird. Die Metall-Halogen-Verbindung fällt in Form von Tropfen nach abwärts und reagiert mit dem durch 3 eingeführten Ammoniak, dem Intergase beigemischt sein können, unter Bildung von festen Reaktionsprodukten. Die Länge des Rohres ist so zu bemessen, daß die Reaktion im unteren Teil des Reaktionsrohres beendet ist, wo die gröberen Teilchen gesammelt werden und von Zeit zu Zeit durch Öffnen des ventils 4 in den Vorratsbehälter abgelassen werden. Nicht umgesetztes Ammoniak und Treibgase gelangen durch den Verbindungsstück 6 in den Filterraum 7, wo die im Reaktionsraum 1 nicht abgeschiedener Feinstanteile von dem Gasstrom abgetrennt werden, der die Apparatur durch Leitung 8 verläßt. Die sich am Boden des Filterraumes ansammelnden Feinstanteile werden von Zeit zu Zeit durch Öffnen des verschlusses 9 abgelassen und im Vorratsbehälter 10 gesammelt.

Die in den Behältern 5 und 10 gesammelten Reaktionsprodukte werden anschließend zwecks Überführung in Metallnitrid einer Temperung bei Temperaturen von 500 bis 1700°C unterzogen. Diese Temperung wird in einer Inertgasatmosphäre oder vorzugsweise einer $NH_3$ enthaltenden Inertgasatmosphäre oder einer $NH_3$-Atmosphäre vorgenommen. Bei den genannten Temperaturen wird etwaiges in den Reaktionsprodukten noch enthaltenes gebundenes Halogen umgesetzt und das Ammoniumhalogenid absublimiert. Je nach der Temperatur entsteht z.B. im Falle von Siliciumimiden bzw. -amiden amorphes oder kristallines Siliciumnitrid oder Mischungen der beiden, wobei bei tieferen Temperaturen der Anteil an amorphem $Si_3N_4$ größer ist, während bei Temperaturen > 1500°C überwiegend oder ganz kristallisiertes $Si_3N_4$ entsteht. Es ist vorteilhaft, das in der ersten Stufe erhaltene Produkt, das in der Regel ein niederes Schüttgewicht besitzt, vor der Temperung zu kompaktieren.

Das erfindungsgemäße Verfahren kann kontinuierlich betrieben werden, da Verstopfungen an den Düseneintrittsstellen, insbesondere bei Verwendung von Zweistoffdüsen, praktisch nicht auftreten und auch keine schwer zu entfernenden Beläge an den Reaktorwandungen auftreten. Das erfindungsgemäße Verfahren benötigt ferner keine hohen Temperaturen und es müssen aus diesem Grunde auch keine hochtemperatur- und korrosionsfeste Werkstoffe für die Herstellung der Apparaturen eingesetzt werden, und es können diese z.B. aus Glas hergestellt sein. Ein weiterer Vorteil besteht darin, daß die Reaktionszone nicht aufgeheizt werden muß. Die Korngröße des herzustellenden Produktes kann durch Variierung der Tröpfchengröße gesteuert werden. Auch entfällt die Verwendung von organischen Lösungsmitteln wie bei einigen bekannten Verfahren durch die das herzustellende Produkt nur in unerwünschter Weise verunreinigt wird.

Beispiel 1

In eine Apparatur, wie sie in der Figur dargestellt ist, werden durch eine Düse mit einem Durchmesser von 0,5 mm stündlich 150 ml $SiCl_4$ sowie 600 l Stickstoff eingedüst, und gleichzeitig werden 800 l Ammoniak eingeführt. Während der Umsetzung erhöht sich die Reaktionstemperatur auf bis zu 90°C.

Das sich in den Auffangbehältern 5 und 10 sammelnde Reaktionsprodukt wird abgezogen und anschließend zwei Stunden lang in einer Ammoniakatmosphäre bei einer Temperatur von 1400°C getempert. Man erhält ein Siliciumnitridpulver mit einem Chlorgehalt von < 0,1 Gew.%.

Beispiel 2

Es wird unter analogen Bedingungen wie in Beispiel 1 gearbeitet, nur daß man anstelle von $SiCl_4$ stündlich 200 ml $Si(CH_3)_2Cl_2$ einführt. Die Reaktionstemperatur steigt bis auf 60°C an. Nach dem Tempern erhielt man ein pulverförmiges Siliciumnitrid mit einem Chlorgehalt von < 0,1 Gew.% und einem Kohlenstoffgehalt von < 0,2 Gew.%.

Beispiel 3

In die in der Figur dargestellten Apparatur werden über eine Zweistoffdüse stündlich 100 ml $TiCl_4$

und 500 l $N_2$ eingedüst. Gleichzeitig werden im gleichen Zeitraum 800 l $NH_3$ in die Reaktionszone eingeführt. Die Reaktionstemperatur steigt auf bis zu 70°C an. Das entstandene hygroskopische gelbliche Pulver wird 2 Stunden lang bei 1400°C in einer Ammoniakatmosphäre getempert. Man erhält ein bräunliches TiN-Pulver mit einem Chlorgehalt von unter 0,1 Gew.%.

Beispiel 4

In ein Reaktionsrohr wird durch eine Zweistoffdüse mit einem Durchmesser von 0,5 mm stündlich 1200 ml Siliciumtetrachlorid und 900 l Stickstoff eingedüst. Gleichzeitig werden in das Reaktionsrohr 900 l/h Ammoniak eingeführt. Durch Fremdheizung wird die Temperatur im Reaktionsrohr auf 400°C gehalten. Das Reaktionsgemisch wird durch ein ebenfalls auf 400°C gehaltenes Heißgasfilter geleitet, das am Filter abgeschiedene Festprodukt abgezogen und zwei Stunden lang in einer Ammoniakatmosphäre bei 1500°C getempert. Man erhält ein Siliciumnitridpulver mit einem Chlorgehalt von < 0,1 Gew.-%.

**Ansprüche**

1. Verfahren zur Herstellung von pulverförmigen Metallnitriden durch Umsetzung von Metall-Halogen-Verbindungen mit Ammoniak in einer ersten Stufe, Abtrennung des gebildeten festen pulverförmigen Reaktionsproduktes und Temperung dieses Reaktionsproduktes in einer zweiten Stufe bei Temperaturen von 500 bis 1700°C, dadurch gekennzeichnet, daß man die Metall-Halogen-Verbindung in Form von Tröpfchen in eine in einer Reaktionszone befindliche Ammoniakatmosphäre eindüst.

2. Verfahren nach Anspruch 1, dadurch gekennzeichnet, daß die Temperatur in der ersten Stufe 0 bis 800°C beträgt.

3. Verfahren nach Ansprüchen 1 bis 2, dadurch gekennzeichnet, daß die Temperatur in der ersten Stufe 300 bis 800°C beträgt.

4. Verfahren nach den Ansprüchen 1 bis 2, dadurch gekennzeichnet, daß man die Metall-Halogen-Verbindung durch das innere Rohr einer Zweistoffdüse und durch das äußere Rohr ein Inertgas in die Reaktionszone einführt.

5. Verfahren nach Ansprüchen 1 bis 3, dadurch gekennzeichnet, daß man als Metall-Halogen-Verbindungen die verbindungen des Bors, Titans, Vanadiums und/oder insbesondere des Siliciums einsetzt.

6. Verfahren nach Ansprüchen 1 bis 4, daß in der Metall-Halogen-Verbindung das Halogen teilweise durch Wasserstoff oder eine Alkylgruppe mit 1 bis 3 C-Atomen ersetzt ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4405589 (IWAI)<br>* Anspruch 1; Beispiel 6 *<br>* Anspruch 3 *<br>--- | 1, 5, 6<br><br>2 | C01B21/06<br>C01B21/068 |
| A | PATENT ABSTRACTS OF JAPAN<br>vol. 7, no. 185 (C-181)(1330) 13 August 1983,<br>& JP-A-58 091018 (DENKI KAGAKU) 30 Mai 1983,<br>* das ganze Dokument *<br>--- | 1, 2, 5, 6 | |
| A | US-A-4671906 (YASUE)<br>* Spalte 5, Zeilen 32 - 33; Ansprüche 1-3; Figur 1 *<br>--- | 1 | |
| A | FR-A-2418276 (INST. PO METALOSNANIE I TECHN. NA METALITE)<br>* Ansprüche 1-8; Figur 1 *<br>--- | 1 | |
| A | CHEMICAL ABSTRACTS, vol. 101, no. 12, September 1984<br>Columbus, Ohio, USA<br>NIPPON MINING: "Fine titanium nitride."<br>Seite 154; rechte Spalte; ref. no. 93731F<br>* Zusammenfassung *<br>--- | 1 | **RECHERCHIERTE SACHGEBIETE (Int. Cl.5)**<br><br>C01B21/00<br>B01J10/00 |
| A | US-A-3959446 (MAZDIYASNI)<br>----- | | |

Der vorliegende Recherchenbericht wurde für alle Patentansprüche erstellt

| Recherchenort | Abschlußdatum der Recherche | Prüfer |
|---|---|---|
| DEN HAAG | 14 MAI 1990 | ZALM W.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0400)